# EUROPÄISCHE PATENTSCHRIFT

(11) **EP 3 090 834 B1**
(45) Veröffentlichungstag und Bekanntmachung des Hinweises auf die Patenterteilung: **11.07.2018**
(21) Anmeldenummer: 15166879.5
(22) Anmeldetag: 08.05.2015
(51) Int. Cl.: B25B 25/00, B25B 27/10, F16L 33/025, F16L 33/207

(54) **PRESSWERKZEUG FÜR EINEN FITTING MIT PRESSLASCHE**
PRESS TOOL FOR A FITTING WITH PRESS TAB
OUTIL DE PRESSE POUR EMMANCHEMENT ET LANGUETTE DE PRESSION

(43) Veröffentlichungstag der Anmeldung: 09.11.2016
(73) Patentinhaber: Geberit International AG, 8645 Jona (CH)
(72) Erfinder: Heusser, Urs, 8722 Kaltbrunn (CH); Graf, Pascal, 8132 Egg bei Zürich (CH); Lippuner, Marc, 8645 Jona (CH)
(74) Vertreter: König Szynka Tilmann von Renesse Patentanwälte Partnerschaft mbB

(56) Entgegenhaltungen:
- DE-A1- 2 458 172
- US-A- 3 257 874
- US-A- 4 724 729
- US-A- 4 884 432
- US-A- 5 000 233
- US-A1- 2011 138 606

## Beschreibung

Die vorliegende Erfindung bezieht sich auf ein Presswerkzeug zum Verpressen eines Fittings.

Fittinge dienen zum Befestigen einer Schlauch- und hier vorzugsweise Rohrleitung an einem anderen Teil, etwa einer Armatur, oder zum Koppeln von Leitungen aneinander. Man unterscheidet unterschiedliche Typen, und zwar nach der Art der abdichtenden Befestigung der Leitung an dem Fitting. Neben selbst-arretierenden Schiebefittingen, bei denen die Leitung eingesteckt wird und sich bei Zugbelastung in umgekehrter Richtung selbst befestigt, und Schiebefittingen, bei denen ein Fittingteil zur Befestigung in axialer Richtung (bezogen auf die Leitung) verschoben wird, sind auch Pressfittinge bekannt. Bei diesen wird ein Fittingteil mit einem speziellen Werkzeug plastisch verformt; im Regelfall handelt es sich um ein Metallblechteil. Bei vielen Pressfittingen dient dabei eine hohlzylindrische Metallblech-Presshülse zum Verpressen und wird entlang ihres im Wesentlichen gesamten Umfangs und damit auch entlang des gesamten Umfangs der Leitung von einer Presszange gegriffen und verformt.

Im Unterschied dazu gibt es speziellere Pressfittingtypen mit von einem im Wesentlichen hohlzylindrischen beziehungsweise ringförmigen Teil radial (wieder in Bezug auf die Zylindergeometrie und damit die Leitung) abstehender Presslasche. Beim Verpressen greift das Werkzeug nur die Presslasche, wobei diese senkrecht zur axialen und zur radialen Richtung in solcher Weise zusammengepresst wird, dass der ringförmige Teil gespannt und auf die Leitung aufgedrückt wird. In der Literatur wird hier in Anlehnung an einen einschlägigen Schweizer Hersteller öfters auch von Oetiker-Typ gesprochen, gelegentlich findet sich für die Presslasche auch der Ausdruck "Pressohr".

Bei der Presslasche handelt es sich in der Regel um einen einstückig mit dem ringförmigen Teil ausgebildeten Blechstreifenabschnitt, der radial gegenüber der Ringform nach außen vorsteht und dabei oft ein im wesentlichen flaches Plateau bildet, das nach außen weist. Ein aus der Presslasche und dem ringförmigen beziehungsweise Zylinderteil bestehende Metallblechabschnitt des Pressfittings wird oft auch als Spannzange bezeichnet. Das Presswerkzeug greift zwischen das Plateau und den ringförmigen Teil und erzeugt oder verstärkt beim Verpressen Hinterschnitte.

Beispielhaft kann verwiesen werden auf die EP 2 341 273 A1, die EP 2 497 989 A1, die EP 2 607 764 A1 und schließlich die EP 2 607 768 A1.

Die zugehörigen Presswerkzeuge werden gelegentlich auch als Presszangen bezeichnet und bilden häufig Aufsätze für motorische (insbesondere pneumatische) Antriebe. Beispielsweise bietet die bereits erwähnte Schweizer Herstellerin Oetiker solche Presswerkzeuge mit Motorantrieb an. Dem Begriff "Zange" entsprechend weisen die Presswerkzeuge zwei Werkzeughälften auf, die aufeinander zu und voneinander weg bewegbar sind, was einer Schließ- und einer Öffnungsbewegung entspricht. Die Werkzeughälften weisen dabei regelmäßig mehr oder weniger keilförmige Spitzen auf, die in den bereits erwähnten Bereich zwischen dem Plateau der Spannzange und der Presslasche eingreifen.

Dabei haben die Werkzeughälften zwei Funktionen, nämlich einerseits natürlich die Verpressung der Presslasche, andererseits aber auch eine geometrische Führung des Presswerkzeugs bei der Schließbewegung, um die Bedienungsperson hinsichtlich einer korrekten Positionierung des Presswerkzeugs relativ zum Fitting (oder umgekehrt) zu unterstützen. Diese Führungsfunktion kann sich einfach daraus ergeben, dass eine keilförmige Werkzeughälften-Spitze bei fortschreitender Schließbewegung anstößt und damit eine korrekte Ausrichtung erzwingt, in der sie dann tiefer in den Zwischenraum eindringen kann.

Zum Stand der Technik wird zusätzlich verwiesen auf die US 5,000,233A, die ein Presswerkzeug zeigt, bei dem sich nacheinander zwei Werkzeugteile um einen im Endzustand zylindrischen Teil eines Fittings legen und diesen schließen, worauf hin zwei andere Werkzeugteile ein Oetiker-Ohr schließen. Dabei wird der Fitting über einen Andruckstempel an einem Rohr angedrückt und gehalten.

Ferner wird verwiesen auf die US 3,257,874A mit einer klassischen Presszange für einen Oetiker-Fitting. Bei dieser verhindert ein Andruckstempel ein Nach-Außen-Wölben und ist hierzu verstellbar.

Der vorliegenden Erfindung liegt das technische Problem zugrunde, ein für Fittinge mit Presslasche ausgelegtes Presswerkzeug anzugeben, das eine korrekte Positionierung bei Verpressen und damit eine zuverlässige Verpressung sicherstellt. Zur Lösung dieser Aufgabe richtet sich die Erfindung auf ein Presswerkzeug für einen Fitting mit einem zylindrischen Teil und einer davon abstehender Presslasche, die senkrecht zu einer axialen Richtung des Fittings zu verpressen ist, mit zwei mit einer Bewegung aufeinander zu schließbaren und mit einer Bewegung voneinander weg öffenbaren Werkzeughälften mit jeweils einem der Verpressung der Presslasche bei der Schließbewegung dienenden Pressteil und einem dem Führen des Presswerkzeugs auf dem Pressfitting bei der Schließbewegung dienenden Führungsteil, wobei zumindest in einer der Verpressung dienenden Schlussphase der Schließbewegung jedes Pressteil über das jeweilige Führungsteil hinaus aufeinander zu bewegbar ist, dadurch gekennzeichnet, dass die beiden Werkzeughälften jeweils doppelt ausgeführte Führungsteile aufweisen, die bezüglich der axialen Richtung beidseits des jeweiligen Pressteils vorgesehen sind.

Bevorzugte Ausgestaltungen der Erfindung sind in den abhängigen Ansprüchen angegeben und werden im Folgenden zusammen mit den Grundgedanken der Erfindung näher erläutert, wobei die einzelnen Merkmale für alle denkbaren Anspruchskategorien einschließlich auch eines Verfahrens zum Verpressen relevant sind.

Erfindungsgemäß wird zwischen der Pressfunktion und der Führungsfunktion gemäß oben stehender Erläuterung insoweit unterschieden, als die entsprechenden Press- und Führungsteile der beiden Werkzeughälften teilweise getrennt beweglich sind. Im Stand der Technik kann man zwar den Werkzeughälften in gewissem Sinn eine Führungsfunktion zuschreiben, diese ergibt sich jedoch eher zwangsläufig aus der Pressfunktion und der Geometrie der Presslasche. Die Erfinder hingegen weisen der Führungsfunktion eine wesentliche eigene Bedeutung zu, weil nach ihren Erfahrungen Fehlverpressungen aufgrund unzureichender Genauigkeit der Positionierung des Werkzeugs relativ zum Fitting oder umgekehrt eine praxisrelevante Bedeutung haben.

Dem soll dadurch vorgebeugt werden, dass Teile des Presswerkzeugs eine ausgewiesene Führungsfunktion übernehmen, weswegen im Folgenden zwischen einem Pressteil und einem Führungsteil jeder Werkzeughälfte unterschieden wird (die konventionellerweise im selben Teil realisiert sind, wenn überhaupt von Führung die Rede sein kann). Darüber hinaus sollen die beiden Pressteile in einer Schlussphase der Schließbewegung, also vor Abschluss der Verpressung, über das jeweilige Führungsteil hinaus bewegbar sein.

Das bedeutet vorzugsweise, dass in dieser Schlussphase das Führungsteil stehen bleibt und sich nur noch das Pressteil weiterbewegt; dies ist jedoch nicht zwingend, das Führungsteil könnte sich auch langsamer beziehungsweise weniger weiterbewegen. Es geht nämlich darum, mit den beiden Führungsteilen möglichst weitgehend eine richtige Positionierung sicherzustellen, bevor die entscheidende Schlussphase des Verpressvorgangs erfolgt. Dies kann durch Herstellung eines Formschlusses mit entsprechend angepassten Teilen des Fittings geschehen, die im Folgenden ebenfalls als Führungsteil bezeichnet werden. Dieser Formschluss muss nicht zwingend vollständig, also spielfrei, erfolgen, sondern kann auch angenähert hilfreich sein. Ein Restspiel entspricht natürlich einer Restungenauigkeit in der Positionierung und die Positionierung ist für einen zuverlässigen praktischen Erfolg weder mit dem Stand der Technik noch mit der vorliegenden Erfindung mathematisch genau durchzuführen. In diesem Sinn könnten sich die Führungsteile auch noch etwas weiter bewegen, was aber, wie gesagt, nicht bevorzugt ist. Bevorzugt ist stattdessen, dass sie vor dem Beginn der erwähnten Schlussphase den gewünschten Formschluss jedenfalls in dem gewünschten Umfang (mit dem tolerierbaren Restspiel) hergestellt haben.

Der Begriff des Formschlusses bedeutet auch nicht zwingend, dass eine Positionierung hinsichtlich aller denkbaren Bewegungsfreiheitsgrade stattfinden muss. Es ist schon ein technischer Erfolg, wenn die Positionierung bestimmte Bewegungsfreiheitsgerade betrifft (und die benutzende Person auf die übrigen achten muss). Bevorzugt ist natürlich, dass Formschluss und Positionierung sämtliche denkbaren Freiheitsgrade betreffen.

Erfindungsgemäß greifen die Führungsteile jedenfalls axial beidseits der Presslasche, und zwar vorzugsweise die Führungsteile des Pressfittings, und führen damit entlang der Leitungsrichtung zentrierend, also axial.

Erfindungsgemäß können die Führungsteile der Werkzeughälften an die ihnen zugeordneten Teile des Pressfittings näher herangebracht werden als im Stand der Technik, weil im Stand der Technik bei einer gemeinsamen Bewegung der Führungsteile und Pressteile (aufgrund einstückiger Ausführung) vor der eigentlichen Verpressung zwischen den Führungsteilen der Werkzeughälften und den ihnen zugeordneten Pressfittingteilen relativ viel Abstand verbleiben muss. Wenn hingegen die Pressteile in der Schlussphase stärker (oder allein) weiterbewegt werden, können dementsprechend die Formteile der Werkzeughälften nah oder sogar in Anlage an die ihnen zugeordneten Pressfittingteile gebracht werden.

Vorzugsweise sind die Öffnungs- und die Schließbewegungen der Werkzeughälften Schwenkbewegungen um zumindest eine Gelenkachse, wobei weiter vorzugsweise pro Werkzeughälfte je eine eigene Gelenkachse vorgesehen ist. Diese beiden Gelenkachsen sind dementsprechend voneinander beabstandet und vorzugsweise parallel zueinander, wobei der Abstand dazwischen wiederum vorzugsweise ungefähr der oder den Richtungen der Schließbewegung in der Schlussphase entspricht. Diese Bewegungsrichtungen wiederum sind nicht zwingend kollinear, aber vorzugsweise zumindest ungefähr. Eine gewisse Abweichung ergibt sich bei wesentlichen Ausführungsformen der Erfindung allein schon daraus, dass die erwähnten beiden Gelenkachsen zur Erreichung einer ausreichend stabilen Konstruktion etwas weiter voneinander entfernt sind als die Spitzen der Pressteile der Werkzeughälften in der Schlussphase der Schließbewegung. Im Stand der Technik und bei dieser Erfindung ist ja vorgesehen, dass die Schließbewegung ungefähr senkrecht zur Achsenrichtung der vor dem Fitting erfassten Leitung liegt und seines zylindrischen Teils, wie für "Oetiker"-Presslaschen typisch. Das gilt dann dementsprechend auch für den Abstand zwischen den beiden Gelenkachsen, die ihrerseits wiederum (wie gegebenenfalls auch eine einzige gemeinsame Achse) parallel zu der Leitungsachse liegen.

Aus der in der Schlussphase getrennten Bewegbarkeit ergibt sich schon, dass die jeweiligen Press-und Führungsteile nicht einstückig ausgebildet sein können. Sie bewegen sich aber vorzugsweise um zumindest geometrisch die jeweils gleiche Drehachse und weiter vorzugsweise auch um baulich die gleiche Gelenkachse. Weiter vorzugsweise führen sie bis zum Anfang der Schlussphase, in der die Führungsteile stehen bleiben, eine gemeinsame und gekoppelte Bewegung aus, sind also relativ zueinander während dieser Anfangsphase der Bewegung unbeweglich.

Die geometrische Passung zur Positionierung der Führungsteile und damit des Presswerkzeugs relativ zum Fitting, die vorstehend als "Formschluss" bezeichnet wurde, kann zum Beispiel in einander ungefähr entsprechenden negativen und positiven Formen der Führungsteile einerseits am Presswerkzeug und andererseits am Fitting bestehen beziehungsweise dadurch hergestellt werden. Zum Beispiel kann ein gewinkeltes Eckstück an dem Führungsteil oder als Führungsteil des Presswerkzeugs (zum Beispiel beim Aneinandertreffen einer zur Gelenkachse und Leitungsrichtung senkrechten äußeren Seitenwand und einer dazu ungefähr senkrechten und zur Gelenkachse und Leitungsrichtung ungefähr parallelen Stirnfläche, die dem zylindrischen Fittingteil und der Leitung zugewandt ist) eine solche rechtwinklige Hohlform erzeugen. Ein entsprechender Vorsprung oder eine Ecke am Fitting passt dann dazu und stellt während eines Teils der Schließbewegung eine entsprechende Führung zur Verfügung. Zur Illustration wird auf das Ausführungsbeispiel verweisen.

Das Ausführungsbeispiel zeigt ferner eine bevorzugte Ausgestaltung, nämlich eine schräge Führungsfläche, wobei sich die Angabe "schräg" auf die Schließbewegung der Werkzeug-Führungsteile unmittelbar vor der Schlussphase bezieht. Diese schräge Führungsfläche kann mit dem Führungsteil am Fitting zusammenwirken, insbesondere auch mit einer schrägen Führungsfläche dort, und ein Hineinschieben in die richtige Position bewirken. In einem bevorzugten Fall betrifft dies eine zentrische Ausrichtung des Presswerkzeugs hinsichtlich der Leitungsrichtung. Dazu ist dann die schräge Führungsfläche bevorzugt in Bezug auf das Werkzeug nach innen gerichtet und an einem in Bezug auf die Leitungsrichtung axial äußeren Teil des Führungsteils vorgesehen, etwa einer Außenwand.

Bei einer anderen, aber kombinierbaren und ebenfalls bevorzugten Variante betrifft die schräge Führungsfläche das auf den Fitting zu Ziehen des Presswerkzeugs. Dazu kann diese schräge Führungsfläche an einem dem zylindrischen Fittingteil und der Leitung zugewandten und insoweit äußeren Teil des Werkzeug-Führungsteils vorgesehen sein. Auch dabei ist diese schräge Führungsfläche in Bezug auf das Werkzeug nach innen gerichtet, also von dem zylindrischen Fittingteil und der Leitung wegweisend.

Zu beiden Varianten der schrägen Führungsflächen wird auf das Ausführungsbeispiel verwiesen.

Wie bereits erläutert, kommen die Führungsteile der beiden Werkzeughälften vorzugsweise vor der Schlussphase der Schließbewegung, also vor dem eigentlichen Verpressen, zum Halten, und zwar besonders bevorzugterweise durch einen Anschlag an dem Pressfitting in Verbindung mit der Herstellung des Formschlusses.

Ferner können die Pressteile und Führungsteile jeder Werkzeughälfte in einer verschieblichen Weise aneinander gekoppelt sein, vorzugsweise durch einen Eingriff eines Vorsprungs an einem der Teile in einen Längsschlitz an einem anderen, zum Beispiel also durch Eingriff eines Vorsprungs an beiden axialen Außenseiten der beiden Pressteile in jeweilige Längsschlitze an je zwei axial daneben liegenden Führungsteilen. Dabei können sich die Vorsprünge in den Längsschlitzen so bewegen, dass sich die Pressteile in der Schlussphase der Schießbewegung weiterbewegen können, wobei die Längsschlitze auch für diese Bewegung einen Endpunkt definieren können (Anschlag des Vorsprunges am Ende des Längsschlitzes). Andererseits kann diese Kopplung dazu dienen, dass das Teil mit dem Längsschlitz von dem Teil mit dem Vorsprung mit zurückgenommen wird, wenn die Verpressung abgeschlossen ist. Dementsprechend kann dann nur das Teil mit dem oder den Vorsprüngen motorisch angetrieben sein, zum Beispiel das Pressteil. Bei dieser Kopplung kann ferner das den Vorsprung oder die Vorsprünge tragende Teil federnd an das den Längsschlitz tragende Teil gekoppelt sein, wobei vorzugsweise der Vorsprung selbst federbeaufschlagt ist. Dadurch kann erreicht werden, dass bis zum Anschlag der Führungsteile (etwa aneinander) diese gegenüber dem Pressteil nach innen federnd vorgespannt sind und dadurch auch lagedefiniert sind. Die Pressteile können sich dann gegen die Federkraft zur Verpressung weiterbewegen.

Auch bei der vorliegenden Erfindung weisen die Pressteile jeweils eine keilförmige Spitze auf und werden diese beiden Spitzen in der Schlussphase der Schließbewegung aufeinander zu bewegt und in die erwähnten Zwischenbereiche der Presslasche gepresst. Dabei ist vorzugsweise bei korrekter Positionierung ebenfalls eine Trennung zwischen Führung und Verpressung insoweit vorgesehen, als die Pressteile mit ihren keilförmigen Spitzen ausschließlich die Presslasche selbst erfassen und das oder die Führungsteile des Fittings nicht von den Spitzen erfasst werden. Umgekehrt sind vorzugsweise die Führungsteile des Presswerkzeugs so ausgelegt, dass sie nicht mit der Presslasche selbst in Wechselwirkung treten, sondern nur mit davon unabhängigen Führungsteilen des Fittings. Es kann aber durchaus vorkommen, dass eine Presslasche oder Spannzange einstückig auch Führungsteile enthält.

Gemäß einer weiteren bevorzugten Ausgestaltung weist das Presswerkzeug einen Auswerfer auf, der zum Auswerfen eines Fittingsteils vorgesehen ist, der beim Verpressen von dem Fitting abgenommen wird. Es kann sich hier um einen Indikator handeln, also ein Teil, dessen Vorhandensein oder Fehlen am Fitting klar angibt, ob die Verpressung bereits stattgefunden hat oder nicht. Ein solches Indikatorteil kann von dem Fitting zum Beispiel abgebrochen oder abgerissen werden oder auch abgeclipst werden, etwa in dem die Pressteile des Werkzeugs darauf einwirken. Insbesondere können die erwähnten keilförmigen Spitzen ein aufgeclipstes Indikatorteil von der Spannzange, insbesondere von der Presslasche, abheben.

Das abgenommene Fittingteil soll nach dieser Ausgestaltung der Erfindung von dem Auswerfer aus dem Werkzeug ausgestoßen werden, wozu der Auswerfer vor und zurück bewegbar ist. Damit kann verhindert werden, dass das Fittingteil beim nächsten Verpressvorgang stört oder gar das Werkzeug blockiert oder dass die Bedienungsperson sich um ein händisches Entfernen bemühen muss.

Der Auswerfer kann an die Öffnungs- und Schließbewegung mechanisch gekoppelt sein, vorzugsweise handelt es sich aber um ein längsverschiebliches Teil (bezogen auf die Leitung radial längsverschieblich, also in Richtung Leitung und zurück) mit einer Feder. Beim Aufsetzen des Werkzeuges wird der Auswerfer gegen die Federkraft zurückgedrückt und nach dem Abnehmen wirft die Federkraft das Fittingteil aus.

Vorzugsweise ist die dem abgenommenen Fittingteil zugewandte Seite des Auswerfers an die entsprechende Seite des abgenommenen Fittingteils formangepasst, sodass letzterer weniger zum seitlichen Wegrutschen neigt. Zum Beispiel kann der Frontbereich des Auswerfers einen flachen mittigen Vorsprung aufweisen, der mit einer entsprechenden Ausnehmung in dem abzunehmenden oder abgenommenen Fittingteil zusammenwirkt.

Im Folgenden wird die Erfindung anhand zweier Ausführungsbeispiels näher erläutert, wobei die einzelnen Merkmale auch in anderen Kombinationen erfindungswesentlich sein können und sich implizit auf alle Kategorien der Erfindung beziehen.
- Figur 1: zeigt eine perspektivische Ansicht eines für die Erfindung besonders geeigneten Pressfittings;
- Figuren 2a, b: zeigen zwei Schnittdarstellungen durch den Pressfitting aus Figur 1 quer zur Leitungsrichtung und in zwei verschiedenen Positionen entlang dieser Leitungsrichtung;
- Figuren 3a, b: zeigen den Pressfitting aus den Figuren 1 und 2 in Einzelteilen und in zwei verschiedenen perspektivischen Ansichten;
- Figuren 4a-c, 5a-c und 6a-c: zeigen ein erfindungsgemäßesPresswerkzeug für den Pressfitting aus den Figuren 1-3, wobei die verschiedenen Figurennummern unterschiedliche Öffnungs- bzw. Schließpositionen darstellen und jeweils die Einzeldarstellung a eine perspektivische Ansicht und die Einzeldarstellungen b und c Schnittansichten quer zur Leitungsrichtung in unterschiedlichen Schnittpositionen entlang dieser Leitungsrichtung bilden;
- Figuren 7a, b: zeigen gemäß einem zweiten Ausführungsbeispiel in zu den Figuren 4c, 5c und 6c vergleichbarer Schnittansicht die Wirkungsweise eines Auswurfmechanismus und
- Figuren 8a, b: zeigen gemäß dem zweiten Ausführungsbeispiel in unterschiedlichen perspektivischen Darstellungen das Presswerkzeug entsprechend Figur 5 angesetzt an einem Pressfitting entsprechend den Figuren 1-3.

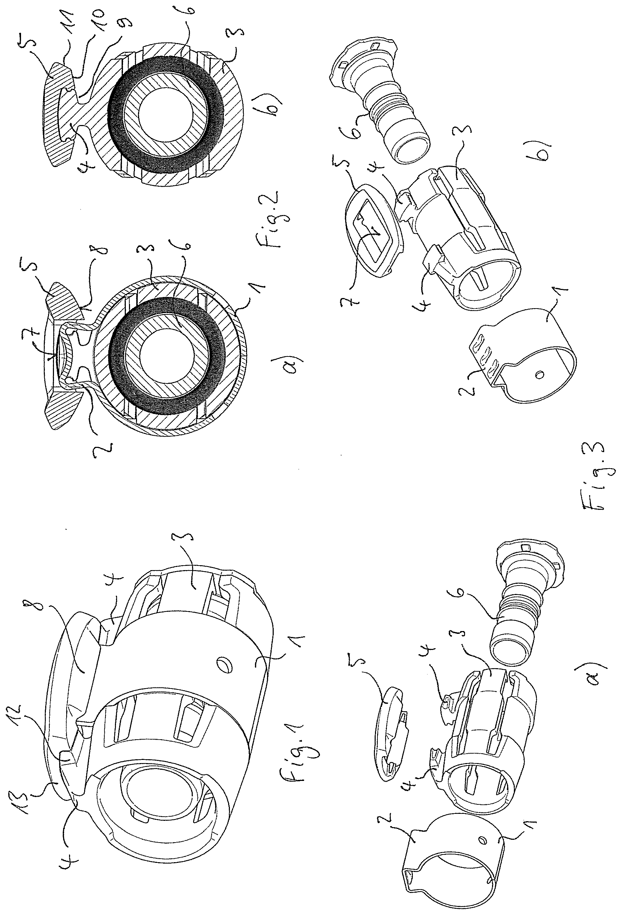

Die Figuren 1-3 zeigen zur Erleichterung des Verständnisses einen für erfindungsgemäßes Presswerkzeug besonders geeigneten Pressfitting. In den Figuren 3a und b erkennt man eine Metallblech-Spannzange 1 mit einer nach außen abstehenden Presslasche 2, die gemäß Figur 1 und Figur 2a auf einem Hülsenteil 3 mit nach oben und damit außen abstehenden Stegen 4 montiert ist. (Figur 2a zeigt einen Schnitt quer zur Leitungsrichtung durch die Mitte (in Bezug auf die Leitungsrichtung) des Pressfittings und Figur 2b einen Schnitt durch eine in Leitungsrichtung versetzte Ebene, allerdings nur insoweit versetzt, als der Indikator 5 noch mitgeschnitten ist.) Die Stege 4 dienen zum Halten eines Indikators 5. Ferner zeigen die Figuren 1-3 noch ein Stützhülsenteil 6, das bspw. Teil einer Armatur sein kann. Der Pressfitting aus den Teilen 1, 3 und 5 dient dann z. B. zum Montieren einer in den Figuren 1 und 3 nicht gezeigten, aber in den Figuren 2a und b geschwärzt eingezeichneten Rohrleitung auf dem Stützhülsenteil 6. Dieses Stützhülsenteil 6 kann insoweit als Teil des Pressfittings aufgefasst werden, als es die Rohrleitung von innen gegen den Anpressdruck infolge der Verpressung des Pressfittings stabilisiert. Es ist allerdings im vorliegenden Fall konventionell ausgebildet und für die Erfindung nicht von weitergehendem Interesse und daher nicht zwingender Anspruchsbestandteil.

Üblicherweise wird die Spannzange 1 mit Hilfe des Hülsenteils 3 auf dem Stützhülsenteil 6 montiert, etwa indem der in den Figuren 1 und 3 rechte hintere Teil des Hülsenteils 3 auf einer Schulter des Stützhülsenteils 6 clipsend arretiert wird. In den dadurch entstehenden Ringraum kann das Rohrleitungsende von der anderen Seite, also in Figur 1 von links vorne, bis zum Anschlag eingeschoben werden. Dann entsteht die Situation gemäß den Figuren 2a und b. Durch ein an sich bekanntes Verpressen der beiden ungefähr radial verlaufenden Schenkel der Presslasche 2 in Umfangsrichtung nach innen wird der übrige zylindrische Teil der Spannzange 1 gespannt und in dieser gespannten Lage gehalten, weil die Presslasche plastisch verformt wird. Das ist an sich als sogenannter Oetiker-Pressfitting bekannt. Der dadurch entstehende Anpressdruck wird in diesem Fall durch das Hülsenteil 3 nach innen vermittelt, wobei dieses durch sich in Leitungsrichtung (axial) erstreckende Schlitze nachgeben kann. Auf die übrigen Einzelheiten des ganz ungefähr zylindrischen Teils des Hülsenteils 3 wird hier nicht im Einzelnen eingegangen, sie sind Gegenstand einer anderen Patentanmeldung. Von Interesse für die vorliegende Erfindung sind aber die beiden Stege 4.

Die beiden Stege 4 dienen in noch näher zu erläuternder Weise zur Halterung des Indikators 5. Wie die Figuren 2b und 3a zeigen, haben die axial gesehen äußeren Enden des Indikators 5 eine ungefähr umgekehrte U-Form, die klammerartig einen Querteil eines ungefähr T-förmiges Profils des jeweiligen Steges 4 seitlich übergreift.

Dabei ist der Indikator 5 auf den Querteil des T-Profils der beiden Stege 4 aufgeclipst. Hierzu hat er als Kunststoffspritzgussteil eine gewisse Eigenelastizität, sodass die Schenkel des umgekehrten U-Profils des Indikators 5 etwas auseinandergebogen werden können. Die innen liegenden Seiten dieser Schenkel und die dementsprechenden Außenseiten des Querteils des T-Profils haben ferner, wie vor allem Figur 2b zeigt, jeweilige Rast- oder Clipsvorsprünge und Ausnehmungen in einer sich aus Figur 3a ergebenden, im Wesentlichen in Leitungsrichtung gestreckten Form. Davon unabhängig sind die genannten Flächen des Steges 4 und des Indikators 5 jeweils hinterschnitten, sodass die Clipsverbindung schon ohne die dargestellten Vorsprünge und Ausnehmungen halten würde, wenngleich schwächer.

Die Figuren 1 und 2a veranschaulichen ferner, dass eine ähnliche Clipsverbindung auch im (in Leitungsrichtung, also axial) gesehen mittleren Bereich des Pressfittings möglich wäre, indem der Indikator 5 dort in analoger Weise in die durch die seitlichen Wände der Presslasche 2 gebildeten Hinterschnitte eingreift. Dies ist aber bei diesem Ausführungsbeispiel nicht der Fall; die Clipsverbindung beschränkt sich vielmehr auf die Pressfittingbereiche axial neben der Spannzange 1.

Die zu der Presslasche 2 weisenden Innenseiten der weiter unten noch zu erläuternden Öffnung in dem Indikator 5 sind vielmehr ungefähr parallel zu der erwähnten Richtung des Abclipsens gemäß Figur 2a sogar einen gewissen Abstand von der Presslasche 2 ein. Das erleichtert eine elastische Verformung und das Abclipsen beim Verpressen.

Allerdings zeigt die in Figur 2a nach unten weisende Seite des Indikators 5, also die dem zylindrischen Teil der Spannzange 1 zugewandte Seite, eine besonders ausgeprägt schräge Form 8, wobei sich die Orientierungsangabe "schräg" auf eine radiale Richtung mitten durch die Presslasche 2 der Spannzange 1 bezieht. Das ist die Richtung, in der der Indikator 5 idealisierterweise abgenommen werden soll.

Hierzu greifen noch näher zu erläuternde keilförmige Spitzen von Pressteilen des Werkzeugs beim Verpressvorgang unter diese schrägen Flächen 8 des Indikators 5 und erzeugen durch Keilwirkung eine Kraft nach oben, also in der erwähnten Richtung. Diese Kraft löst die beschriebene Clipsverbindung, also den Formschluss zwischen Indikator 5 und Hülsenteil 3 (konkret den Stegen 4), sodass nach dem Verpressen in der beschriebenen verclipsten Position kein Indikator 5 mehr zu sehen ist. Da dieser in einer Signalfarbe gehalten ist, die sich von den Farben der übrigen Pressfittingteile deutlich unterscheidet, ergibt sich daraus ein wesentlicher Unterschied im Erscheinungsbild.

Beim vorliegenden Beispiel sind die Indikatoren reversibel abclipsbar, können also im Prinzip gesammelt und für neue Pressfittinge wiederverwendet werden.

Die Stabilität des Indikators 5 selbst wird dadurch gefördert, dass er die Presslasche 2 vollständig umläuft, wie vor allem die Figuren 1 und 3b zeigen. Dabei weist er allerdings radial außerhalb der Presslasche 2 eine große Öffnung auf, die in Figur 3b mit 7 bezeichnet ist und durch die hindurch im montierten Zustand (Figur 2a) das in Figur 3b sichtbare Plateau der Presslasche gut erkennbar ist. Die dem Benutzer vertraute technische Natur des Pressfittings als Oetiker-Pressfitting mit der an sich vorbekannten Presslaschenform ist also trotz des relativ groß gehaltenen Indikators 5 unmittelbar erkennbar und deutlich. Ferner kann das für den Indikator 5 verwendete (und in vielen Fällen wohl nicht wiederzuverwendende) Material knapp gehalten werden.

Figur 2b zeigt das Querschnittsprofil des Indikators 5 und des Steges 4 axial neben der Spannzange 1, aber noch im Bereich des T-Profils des Steges 4. Man erkennt gut, dass der Querteil des T-Profils durch den Indikator 5 gewissermaßen verbreitert wird und dabei setzt das Profil des Indikators 5 zunächst eine nach unten, also zum zylindrischen Teil der Spannhülse 1 weisenden schrägen Flächenabschnitt 9 unter dem Querteil des T-Profils des Steges 4 fort, und zwar mit einem ebenso schrägen Flächenabschnitt 10, an den sich dann ein deutlich steilerer, aber immer noch im gleichen Sinn schräger Flächenabschnitt 11 anschließt.

Figur 1 verdeutlicht, dass sich der Flächenabschnitt 11 auch über den Teil des Indikators 5 über der Spannzange 1 hinweg fortsetzt und dabei mit nur kleinem Knickwinkel in den bereits beschriebenen schrägen Flächenabschnitt 8 übergeht (Figur 2a), wohingegen der Flächenabschnitt 10 von dem Flächenabschnitt 8 deutlich abgegrenzt ist, vgl. Figur 1.

Schließlich gibt es an den Außenseiten in axialer Richtung der Querteile der Stege 4 schräge Flächen 12, an die ebenfalls eine Außenfläche 13 des Indikators weitgehend bündig anschließt und die in doppeltem Sinn schräg sind: Einerseits sind sie leicht nach unten gekippt, also auf den Hülsenteil 3 bzw. dessen zylindrischen Hauptabschnitt zu, andererseits in Umfangsrichtung nach außen etwas zurückspringend. Die axiale Erstreckung der Querteile der Stege 4 ist also weiter innen, an der Basis des T-Profils, etwas größer als weiter außen.

Die Funktion der verschiedenen schrägen Flächenabschnitte 9-12 ergibt sich aus der folgenden Beschreibung der Wechselwirkung mit dem erfindungsgemäßen Presswerkzeug:

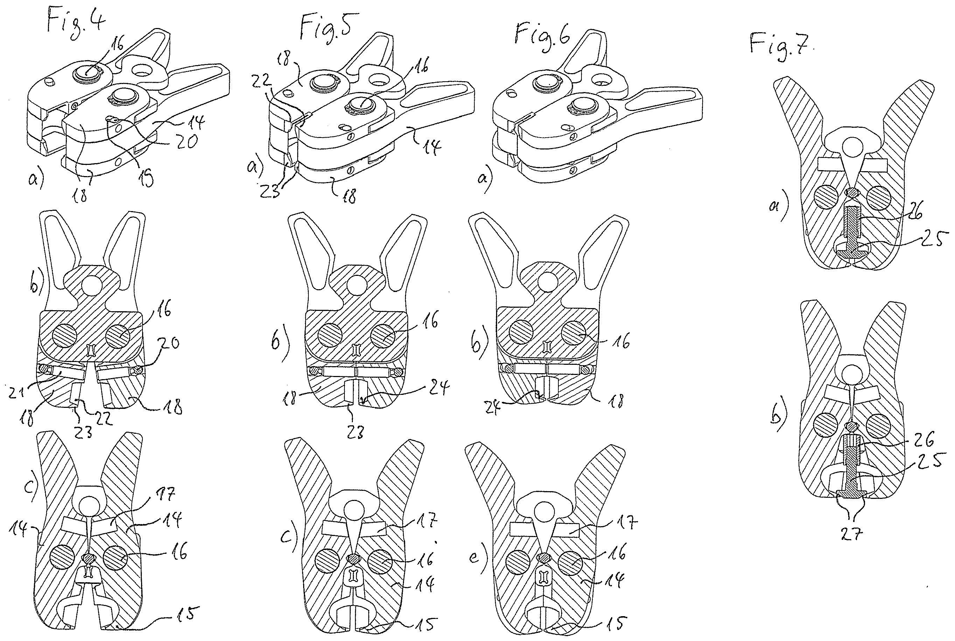

Die Figuren 4-7 zeigen ein speziell für den beschriebenen Pressfitting ausgelegtes Presswerkzeug, das grundsätzlich zangenartig aufgebaut ist, als erstes Ausführungsbeispiel. In den Figuren 4-6 ist dieses Presswerkzeug in drei verschiedenen Positionen, nämlich zunächst geöffnet zum "Überstülpen" über den Indikator 5 und vor allem die Presslasche 2, dann teilgeschlossen und dann in die endgültige Pressstellung geschlossen dargestellt. Dabei zeigen die Teildarstellung a-c jeweils eine perspektivische Ansicht, einen außermittigen Schnitt quer zu den noch zu erläuternden Drehachsen und dann einen mittigen Schnitt ebenfalls quer zu den Drehachsen. Man erkennt dabei zunächst, dass das Werkzeug im Wesentlichen in drei Ebenen aufgebaut ist, wobei die mittlere Ebene in den Teildarstellungen c und eine der beiden spiegelsymmetrischen äußeren Ebenen in den Teildarstellungen b zu sehen ist.

Die an sich vorbekannte Verpressfunktion wird durch die mittlere Ebene wahrgenommen. Die Figuren 4c, 5c und 6c zeigen hierbei zwei presszangenartige Arme 14 mit einem jeweiligen keilartigen Kopf, nämlich einem Pressteil 15 des Werkzeugs. Die Presszangenarme 14 sind um zwei quer beabstandete Drehachsen 16 verschwenkbar und werden durch eine in den dargestellten Sacklöchern 17 gelagerte Kompressionsschraubenfeder (nicht gezeigt) in Schließrichtung beaufschlagt. Zusätzlich ist ein nicht gezeigter motorischer Antrieb vorgesehen, der im Wesentlichen einen Keil zwischen die in den Figuren nach oben weisenden Schenkel der Presszangenarme 14 drückt und damit die für das Verpressen selbst erforderliche Kraft bereitstellt.

Beim Verpressen greifen die keilartigen Spitzen 15, also die Pressteile, unter die schrägen Flächen 8 des Indikators und damit an die Fußbereiche der Schenkel der Presslasche 2. In der Position gemäß Figur 5c wird dabei noch keine oder keine nennenswerte Kraft auf den Indikator 5 ausgeübt und noch keine Verpressung durchgeführt. In einer weitergehenden Schließbewegung von Figur 5c nach Figur 6c wird die eigentliche Verpressung der Presslasche 2 durch Zusammenschieben der erwähnten Fußbereiche und dabei plastisches Verformen durchgeführt (die konventionell ist und deswegen nicht näher erläutert werden muss). Gleichzeitig werden durch die Wechselwirkung zwischen den Pressteilen 15 und den Schrägflächen 8 Kräfte auf den Indikator 5 ausgeübt, die diesen abclipsen. Er ist dann zunächst in dem in Figur 6c über den Pressteilen 15 erkennbaren Hohlraum gefangen und wird, wie weiter unten noch anhand Figur 7 erläutert, danach nach unten ausgestoßen.

Die Figuren 4b, 5b und 6b zeigen zwei weitere von insgesamt vier Werkzeugteilen, nämlich Führungsteile 18, die grundsätzlich ähnlich wie die Pressteile 15 bewegt werden. Dazu sind sie auf denselben Bolzen und damit an denselben Drehachsen 16 gelagert. Ferner weisen sie jeweils in den Figuren 4a-6a sichtbare Längsschlitze 19 auf, in denen an den Presszangenarmen 14 befestigte Stifte 20 über eine bestimmte Strecke beweglich sind. In den Figuren 4b-6b erkennt man ferner kleine Federelemente in einem Zylindergehäuse, die mit 21 bezeichnet sind und in einem Gewinde in der jeweiligen Bohrung gehalten sind. Über dieses Gewinde können sie verstellt werden. Sie beaufschlagen mit ihren außenseitigen gefederten Kolbenstangen die erwähnten Stifte 20. Damit nehmen also die Presszangenarme 14 die Führungsteile 18 in allen Bewegungsphasen zwischen den Positionen gemäß den Figuren 4 und 5 mit und sind die Führungsteile dabei in ihrer relativ zu den Presszangenarmen 14 innersten Position, vgl. die Figuren 4a und 5a. Wenn die Führungsteile in noch näher beschriebener Weise in der Position gemäß Figur 5 am Pressfitting anstoßen, können die Pressteile 15 darüber hinaus weiter in die Pressstellung bewegt werden, und zwar abgesehen von den durch die Wechselwirkung zwischen den Pressteilen 15 und dem Pressfitting entstehenden Kräften gegen die Kräfte der Federelemente 21. Bei den umgekehrten Bewegungen bleiben die Führungsteile zunächst bei einer Bewegung von Figur 6 nach Figur 5 in ihrer geschlossensten Stellung und bewegen sich erst ab der Position gemäß Figur 5 dann weiter mit den Pressteilen nach außen.

Wie durch die Benennung schon vorgegeben, haben die Führungsteile 18 die Aufgabe, das Werkzeug relativ zu dem Pressfitting und der Leitung (sowie weiteren mit dem Pressfitting verbundenen Vorrichtungen) zu positionieren und dem Benutzer eine korrekte Positionierung durch eine Führung, das heißt auch "haptische" Rückmeldung, bei der manuellen Handhabung die Positionierung zu erleichtern. Dazu weisen die Führungsteile jeweils in axialer Richtung außen liegende Seitenwände auf, die in den Figuren 4a-6a nach oben und nach unten weisen und mit 22 bezeichnet sind. Diese Seitenwände 22 lassen in der Position der Figuren 5 und 6 einen Spalt zwischen sich, der für den mittleren Teil des jeweiligen Steges 4 axial außerhalb des Querteils und des T-Profils ausreicht. Die Innenseiten dieser Seitenwände 22 sind dabei etwas schräg gestellt und passen insoweit zu der Schrägstellung der axialen Seitenkanten der Stege 4. Der Begriff "schräg" bezieht sich hierbei auf die Schließbewegung, die ja im Wesentlichen in einer Richtung senkrecht zur Leitungsrichtung und außerdem senkrecht zu der erwähnten Richtung vom Mittelpunkt der Leitung (und des Pressfittings) durch die Mitte der Presslasche 2 nach außen verläuft. Die Seitenwände 22 gleiten bei der Bewegung von Figur 4 nach Figur 5 an den axial äußeren Kanten der Stege 4 entlang, weswegen diese in der erläuterten Weise etwas schräg gestellt sind. Dies führt im Wesentlichen zu einer Positionierung entlang der axialen Richtung und auch hinsichtlich Drehbewegungen um eine Drehachse, die vom Leitungsmittelpunkt mittig durch die Presslasche 2 nach außen führt.

Außerdem gibt es auf den zylindrischen Teil der Spannzange 1 und auch des Hülsenteils 3 zu gerichtete Außenwände der Führungsteile, die mit 23 bezeichnet sind und in den Figuren 4b-6b die untere Seite der gezeichneten abschließenden Spitzen der Führungsteile bilden. Diese Außenwände 23 haben an ihrer Innenseite (in Bezug auf das Werkzeug), also in den Teildarstellungen b und c nach oben, ebenfalls eine schräge Fläche. Diese ist mit 24 bezeichnet und kommt in Wechselwirkung mit der schrägen Fläche 9 des jeweiligen Steges 4. Hierdurch erfolgt eine Führung im Hinblick auf die richtige Nähe zur Leitung (Bewegung entlang der Richtung vom Mittelpunkt des Pressfittings durch die Presslasche 2 nach außen und umgekehrt) und hinsichtlich Drehungen um eine Drehachse, die senkrecht zu dieser gerade erwähnten Abstandsrichtung und zur Leitungsrichtung liegt. Ferner erfolgt dadurch eine Führung um Drehungen um die Leitungsrichtung als Achse. Auch die verbleibende Verschieberichtung, nämlich in der Schließrichtung der Werkzeugteile, erfolgt durch diese Wechselwirkung zwischen den schrägen Flächen 24 und 9, aber auch durch die zuvor beschriebene zwischen der schrägen Fläche 12 und der an der Seitenwand 22.

Die beschriebenen Führungsvorgänge finden statt bei einer Annäherung aus der Position gemäß Figur 4 in die gemäß Figur 5 und ist dann idealerweise abgeschlossen. In der Position gemäß Figur 5 sitzen also die Führungsteile 18 praktisch spielfrei auf dem Pressfitting auf, obwohl der Pressvorgang noch gar nicht stattgefunden hat. Damit ist sichergestellt, dass der eigentliche Pressvorgang von Figur 5 in Figur 6 in korrekter Lage vonstattengeht. Auch erst dann wird der Indikator 5 abgeclipst; er bleibt also am Platz, wenn das Werkzeug aufgrund grober Fehlpositionierung gar nicht in die Position gemäß Figur 5 gelangt und neu angesetzt werden muss.

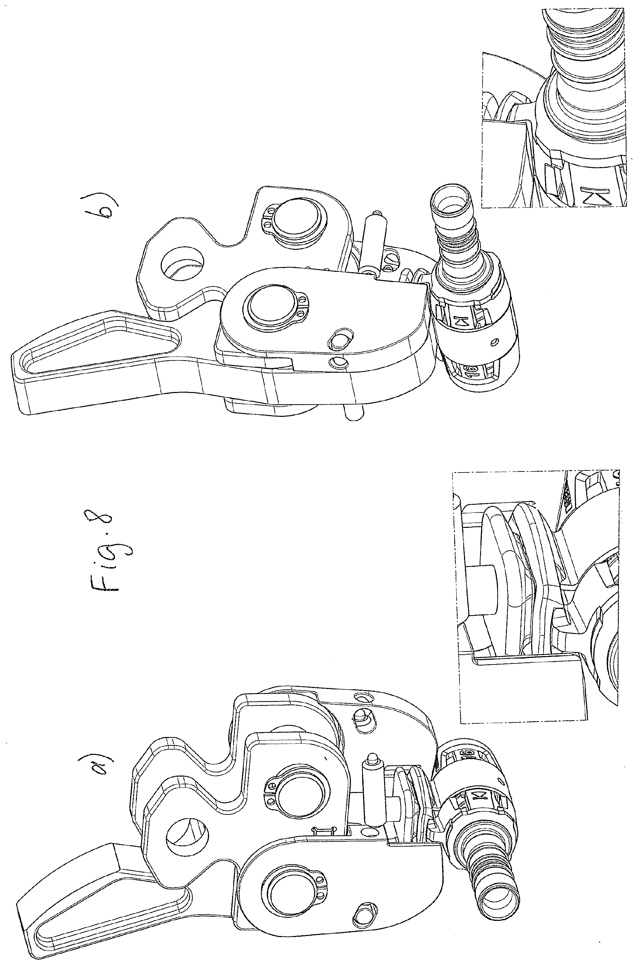

Figur 7 zeigt einen Auswerfermechanismus für den Indikator 5 bei einem zweiten Ausführungsbeispiel, für das im Übrigen alle vorstehenden Erläuterungen gelten. Dabei ist ein Stempel 25 teleskopisch in einer Hülse 26 gelagert und durch eine (nicht gezeichnete) Feder im Sinn von Figur 7 nach unten beaufschlagt. Der Stempel 25 hat ferner eine in Figur 7 nach unten weisende Stirnfläche mit einer rahmenartig umlaufenden und dabei etwas zurückspringenden Außenkante 27, vgl. hierzu auch Figur 8a. Innerhalb dieser Außenkante 27 ist die Stirnfläche des Stempels 25 plan. Mit dem planen Teil der Stirnfläche kann der Stempel in die Öffnung 7 des Indikators 5 eingreifen und die Kante 27 ist dementsprechend an die Form des Indikators 5 in der Umgebung dieser Öffnung 7 formangepasst.

Wenn in der Position gemäß Figur 4 das Werkzeug auf den Indikator 5 und die Stege 4 aufgesetzt wird, drücken also die Presslasche 2 und der Indikator 5 den Stempel 25 gegen die Federkraft in die Hülse 26 zurück. Dies ist in Figur 8a perspektivisch und (der Sichtbarkeit halber) unter Weglassung der Pressteile und eines Teils der Führungsteile dargestellt. Nach dem bereits beschriebenen Abclipsen ist der Indikator 5 dann in einem Raum zwischen den Pressteilen und Führungsteilen gefangen, vgl. Figur 6b und c und bzgl. der folgenden Öffnung Figur 5b und c. Wenn dann das Werkzeug ausreichend weit geöffnet wird, vgl. Figur 7b, drückt der Stempel 25 infolge der Federkraft den Indikator 5 zwischen den Pressteilen und am Rand der Führungsteile der Werkzeughälften nach unten heraus. Bis zu diesem Zeitpunkt ist der Indikator 5 dabei durch den Formschluss (hinsichtlich Bewegungen quer zur Auswurfrichtung) zwischen der Stirnfläche des Stempels 25 und der Oberseite (gemäß den Figuren 1 und 2) des Indikators 5 sicher gehalten und kann nicht infolge einer Fehlpositionierung zu Funktionsstörungen führen.

Figur 8a dient ferner zur Veranschaulichung der Erläuterungen, die zu den Figuren 4-6 gegeben wurden, insbesondere im Hinblick auf die Wechselwirkung mit der Formgebung des Pressfittings. Figur 8b vervollständigt diese Veranschaulichung, indem zusätzlich ein Pressteil dargestellt ist und die Perspektive etwas verändert ist. Weitere Erläuterungen erübrigen sich und es kann auf das Obenstehende verwiesen werden.

## Patentansprüche

1. Presswerkzeug für einen Fitting mit einem zylindrischen Teil (1) und einer davon abstehenden Presslasche (2), die senkrecht zu einer axialen Richtung des Fittings zu verpressen ist, mit
zwei mit einer Bewegung aufeinander zu schließbaren und mit einer Bewegung voneinander weg öffenbaren Werkzeughälften (14, 15, 18) mit jeweils einem der Verpressung der Presslasche bei der Schließbewegung dienenden Pressteil (15)
und einem dem Führen des Presswerkzeugs auf dem Pressfitting bei der Schließbewegung dienenden Führungsteil (18),
wobei zumindest in einer der Verpressung dienenden Schlussphase der Schließbewegung jedes Pressteil (15) über das jeweilige Führungsteil (18) hinaus aufeinander zu bewegbar ist,
**dadurch gekennzeichnet, dass** die beiden Werkzeughälften (14, 15, 18) jeweils doppelt ausgeführte Führungsteile (18) aufweisen, die bezüglich der axialen Richtung beidseits des jeweiligen Pressteils (15) vorgesehen sind.

2. Presswerkzeug nach Anspruch 1, bei dem die Pressteile (15) und die Führungsteile (18) der Werkzeughälften (14, 15, 18) gelenkig bewegbar sind, und zwar vorzugsweise um jeweils eine eigene Gelenkachse (16) pro Werkzeughälfte (14, 15, 18), die vorzugsweise für das jeweilige Führungsteil (18) und das jeweilige Pressteil (15) gemeinsam existiert.

3. Presswerkzeug nach einem der vorstehenden Ansprüche, bei dem die Führungsteile (18) jeweils eine dem zylindrischen Teil (1) des Fittings zugewandte Außenwand (23) zum Untergreifen eines Führungsteils (4) des Fittings und im axialen Sinn äußere Seitenwände (22) zum Zentrieren des Werkzeugs auf dem Fitting in axialer Richtung aufweisen, wobei bei jedem der doppelten Führungsteile (18) jeder Werkzeughälfte (14, 15, 18) je eine axiale Seitenwand (22) vorgesehen ist.

4. Presswerkzeug nach einem der vorstehenden Ansprüche, bei dem die Führungsteile (18) jeweils zu der Bewegungsrichtung bei der Schließbewegung der Werkzeughälften (14, 15, 18) unmittelbar vor der Schlussphase der Schließbewegung schräge Führungsflächen zur Führung aufweisen, und zwar jeweils an einer axial äußeren Seitenwand (22) jedes Führungsteils (18) und dabei axial jeweils nach innen gerichtet.

5. Presswerkzeug nach einem der vorstehenden Ansprüche, bei dem die Führungsteile (18) jeweils zu der Bewegungsrichtung bei der Schließbewegung der Werkzeughälften (14, 15, 18) unmittelbar vor der Schlussphase der Schließbewegung schräge und dabei von dem zylindrischen Teil des Fittings weg weisende Führungsflächen (24) zur Führung aufweisen, und zwar an einer dem zylindrischen Teil (1) des Fittings zugewandten Außenwand (23) jedes Führungsteils (18).

6. Presswerkzeug nach einem der vorstehenden Ansprüche, bei dem die Pressteile (15) und die Führungsteile (18) jeder Werkzeughälfte (14, 15, 18) durch einen Eingriff eines Vorsprungs (20) in einen Längsschlitz (19) aneinander gekoppelt sind, wobei der Längsschlitz (19) einerseits in der Schlussphase der Schließbewegung die Bewegung des Pressteils (15) über das Führungsteil (18) hinaus erlaubt und andererseits bei einer Öffnungsbewegung zur Mitnahme dient.

7. Presswerkzeug nach Anspruch 6, bei dem das den Vorsprung (20) tragende Teil (15), vorzugsweise der Vorsprung (20) selbst, federnd an das den Längsschlitz (19) tragende Teil (18) gekoppelt ist.

8. Presswerkzeug nach einem der vorstehenden Ansprüche, bei dem jedes Pressteil (15) eine keilförmige Spitze aufweist und die beiden Spitzen in der Schlussphase der Schließbewegung aufeinander zu gerichtet sind und aufeinander zu bewegt werden.

9. Presswerkzeug nach einem der vorstehenden Ansprüche, bei dem zwischen den beiden Werkzeughälften (14, 15, 18) ein senkrecht zu der Bewegungsrichtung der Pressteile (15) in der Schlussphase der Schließbewegung vor und zurück bewegbarer Auswerfer (25) zum Auswerfen eines bei dem Verpressen von dem Fitting abgenommenen Fittingteils (5) vorgesehen ist.

10. Verwendung eines Presswerkzeugs nach einem der vorstehenden Ansprüche zum Verpressen eines Fittings mit einem zylindrischen Teil (1) und davon abstehender Presslasche (2), wobei die Führungsteile (18) bei der Schließbewegung mit einem Führungsteil (4) des Fittings einen Formschluss erzeugen, der das Presswerkzeug bzgl. des Fittings definiert positioniert und hält, woraufhin dann in der Schlussphase der Schließbewegung die Pressteile (15) die Verpressung der Presslasche (2) durchführen.

11. Verwendung nach Anspruch 10, bei der die Führungsteile (18) der beiden Werkzeughälften (14, 15, 18) vor der Schlussphase der Schließbewegung durch in Anschlag Kommen an den Pressfitting bei der Herstellung des Formschlusses gestoppt werden.

12. Verwendung nach Anspruch 10 oder 11, bei der die Führungsteile (18) den Fitting axial beidseits der Presslasche (2) greifen und durch eine Wechselwirkung mit dem Führungsteil (4) des Fittings führen.

13. Verwendung nach Anspruch 10, 11oder 12 eines Presswerkzeugs nach Anspruch 8, bei der die Pressteile (15) in der Schlussphase der Schließbewegung mit den jeweiligen keilförmigen Spitzen in einen Bereich zwischen dem zylindrischen Teil (1) des Pressfittings und einem radial äußeren flachen Teil der Presslasche (2) greifen und die Presslasche (2) daraufhin verpressen, dabei aber nur die Presslasche (2), nicht aber das Führungsteil (4) des Fittings erfassen.

14. Verwendung nach einem der Ansprüche 10 bis 13 eines Presswerkzeugs nach Anspruch 9, bei der ein mit dem abzunehmenden Fittingteil (5) in Kontakt tretender Frontbereich des Auswerfers (25) an die ihm zugeordnete Seite des Fittingteils (5) in solcher Weise formangepasst ist, dass damit einem Wegrutschen des abgenommenen Fittingteils (5) in einer Richtung quer zu der Bewegungsrichtung des Auswerfers (25) entgegengewirkt werden kann.

## Claims

1. Press tool for a fitting having a cylindrical part (1) and, protruding therefrom, a press lug (2) to be pressed perpendicularly to an axial direction of said fitting, said press tool having
two tool halves (14, 15, 18) closable by a movement towards each other and openable by a movement away from each other, said tool halves having
a respective press part (15) for said pressing of said press lug during said closing movement
and a respective guide part (18) for guiding said press part on said press fitting during said closing movement,
wherein at least in a final phase of said closing movement, said phase serving for said pressing, each press part (15) is movable beyond the respective guide part (18) towards each other,
**characterized in that** said two tool halves (14, 15, 18) respectively comprise guide parts (18) provided doubly and on both sides of the respective press part (15) with respect to the axial direction.

2. The press tool according to claim 1, wherein said press parts (15) and said guide parts (18) of said tool halves (14, 15, 18) are movable in an articulated manner, preferably around a respective individual axis of articulation (16) per tool half (14, 15, 18), which preferably exists for said respective guide part (18) and said respective press part (15) in common.

3. The press tool according to one of the preceding claims, wherein said guide parts (18) comprise a respective outer wall (23) for engaging below a guide part (4) of said fitting and facing towards said cylindrical part (1) of said fitting, and sidewalls (22) being outer walls in an axial sense, for centrally aligning the tool on the fitting in the axial direction, wherein a respective axial sidewall (22) is provided at each of the double guide parts (18) of each tool half (14, 15, 18).

4. The press tool according to one of the preceding claims, wherein said guide parts (18) comprise respective guide surfaces for guiding, being oblique to the movement direction in the closing movement of the tool halves (14, 15, 18) immediately before the final phase of the closing movement, namely respectively being provided on an axially outer sidewall (22) of each guide part (18) and oriented inwardly, respectively, therein.

5. The press tool according to one of the preceding claims, wherein said guide parts (18) comprise respective guide surfaces (24) for guiding, being oblique to the movement direction in the closing movement of the tool halves (14, 15, 18) immediately before the final phase of the closing movement and facing away from said cylindrical part of said fitting, namely on an outer wall (23) of each guide part (18) facing towards said cylindrical part (1) of said fitting.

6. The press tool according to one of the preceding claims, wherein said press parts (15) and said guide parts (18) of each tool half (14, 15, 18) are mutually coupled by means of an engagement of a projection (20) into a longitudinal slit (19), wherein said longitudinal slit (19) on the one hand allows a movement of said press part (15) beyond said guide part (18) in said final phase of said closing movement and on the other hand serves for entraining during an opening movement.

7. The press tool according to claim 6, wherein the part (15) comprising said projection (20), preferably said projection (20) as such, is coupled to the part (18) comprising said longitudinal slit (19) in a resilient manner.

8. The press tool according to one of the preceding claims, wherein each press part (15) has a wedge-like tip and the two tips are facing each other and are moved towards each other in said final phase of said closing movement.

9. The press tool according to one of the preceding claims, wherein ejecting means (25) for ejecting a fitting part (5) removed from said fitting during said pressing and movable forward and backward perpendicularly to the movement direction of the said press parts (15) in said final phase of said closing movement is provided between said two tool halves (14, 15, 18).

10. A use of the press tool according to one of the preceding claims for pressing a fitting having a cylindrical part (1) and, protruding therefrom, a press lug (2), wherein said guide parts (18) make up a form closure with a guide part (4) of said fitting in said closing movement, said form closure positioning and holding said press tool relative to said fitting in a defined manner, whereupon then, in said final phase of said closing movement, said press parts (15) perform said pressing of said press lug (2).

11. The use according to claim 10, wherein said guide parts (18) of said two tool halves (14, 15, 18) are stopped by abutting against said press fitting during making up said form closure before said final phase of said closing movement.

12. The use according to claim 10 or 11, wherein said guide parts (18) engage said fitting axially on both sides of said press lug (2) and guide by means of an interference with said guide part (4) of said fitting.

13. The use according to claim 10, 11, or 12 of a press tool according to claim 8, wherein said press parts (15) engage by means of said respective wedge-like tips into a region between said cylindrical part (1) of said press fitting and a radially outer flat part of said press lug (2) in said final phase of said closing movement, and press said press lug (2) thereafter, but only grip said press lug (2) and not said guide part (4) of said fitting therein.

14. The use according to one of claims 10 to 13 of a press tool according to claim 9, wherein a front portion of said ejection means (25) being in contact with said fitting part (5) to be removed, is adapted as regards shape to the allocated side of said fitting part (5) such that a slipping away of said removed fitting part (5) in a direction transverse to the movement direction of the ejection means (25) can be inhibited thereby.

## Revendications

1. Outil à sertir destiné à un raccord, lequel raccord possède une partie cylindrique (1) et une languette à sertir (2) décalée de cette dernière et destinée à être serrée perpendiculairement au sens axial du raccord, ledit outil comportant:
deux moitiés d'outil (14, 15, 18) refermables selon un mouvement dirigé l'une vers l'autre et ouvrables selon un mouvement dirigé en s'éloignant l'une de l'autre, et présentant
respectivement une partie de sertissage (15) servant au serrage de la languette à sertir lors du mouvement de fermeture et
une partie de guidage (18) servant au guidage de l'outil à sertir sur le raccord à sertir lors du mouvement de fermeture,
étant entendu que, au moins dans une phase finale du mouvement de fermeture permettant le serrage, chaque partie de sertissage (15) peut se déplacer vers l'autre en dépassant la partie de guidage (18),
**caractérisé en ce que** les deux moitiés d'outil (14, 15, 18) présentent des parties de guidage (18) conçues en double et prévues, eu égard au sens axial, de part et d'autre de la partie de sertissage (15) respective.

2. Outil à sertir selon la revendication 1, dans lequel les parties de sertissage (15) et les parties de guidage (18) des moitiés d'outil (14, 15, 18) sont mobiles de manière articulée, et ce de préférence sur un axe d'articulation (16) propre pour chaque moitié d'outil (14, 15, 18), lequel axe est de préférence commun pour la partie de guidage (18) respective et la partie de sertissage (15) respective.

3. Outil à sertir selon l'une des revendications précédentes, dans lequel les parties de guidage (18) présentent chacune une paroi extérieure (23) tournée vers la partie cylindrique (1) du raccord et servant à saisir par le dessous une partie de guidage (4) du raccord, et des parois latérales (22), considérées dans le sens axial, destinées à centrer l'outil sur le raccord dans le sens axial, chacune des parties de guidage (18) doubles de chaque moitié d'outil (14, 15, 18) présentant une paroi latérale axiale (22).

4. Outil à sertir selon l'une des revendications précédentes, dans lequel les parties de guidage (18) présentent chacune des surfaces de guidage obliques, par rapport au sens de déplacement lors du mouvement de fermeture des moitiés d'outil (14, 15, 18) immédiatement avant la phase finale du mouvement de fermeture, servant au guidage, et ce sur une paroi latérale (22) respective axialement extérieure de chaque partie de guidage (18) et orientée axialement vers l'intérieur.

5. Outil à sertir selon l'une des revendications précédentes, dans lequel les parties de guidage (18) présentent chacune des surfaces de guidage (24) obliques, par rapport au sens de déplacement lors du mouvement de fermeture des moitiés d'outil (14, 15, 18) immédiatement avant la phase finale du mouvement de fermeture, détournées de la partie cylindrique du raccord, et servant au guidage, et ce sur une paroi extérieure (23) de chaque partie de guidage (18) qui est tournée vers la partie cylindrique (1) du raccord.

6. Outil à sertir selon l'une des revendications précédentes, dans lequel les parties de sertissage (15) et les parties de guidage (18) de chaque moitié d'outil (14, 15, 18) sont couplées entre elles grâce à la coopération d'un ergot (20) et d'une fente longitudinale (19), ladite fente longitudinale (19) permettant d'une part le mouvement de la partie de sertissage (15) pardessus la partie de guidage (18) dans la phase finale du mouvement de fermeture et servant d'autre part à une collaboration lors du mouvement d'ouverture.

7. Outil à sertir selon la revendication 6, dans lequel la partie (15) porteuse de l'ergot (20), et de préférence l'ergot (20) lui-même, est couplée de manière élastique à la partie (18) porteuse de la fente longitudinale (19).

8. Outil à sertir selon l'une des revendications précédentes, dans lequel chaque partie de sertissage (15) présente une pointe en forme de coin et les deux pointes sont orientées l'une vers l'autre et sont déplacées l'une vers l'autre dans la phase finale du mouvement de fermeture.

9. Outil à sertir selon l'une des revendications précédentes, dans lequel il est prévu, entre les deux moitiés d'outil (14, 15, 18), un éjecteur (25) mobile d'avant en arrière perpendiculairement au sens de déplacement des parties de sertissage (15) dans la phase finale du mouvement de fermeture, lequel permet d'éjecter une partie de raccord (5) retirée du raccord pendant le serrage.

10. Utilisation d'un outil à sertir selon l'une des revendications précédentes, afin de serrer un raccord présentant une partie cylindrique (1) et une languette à sertir (2) décalée de cette dernière, lesdites parties de guidage (18) assurant une complémentarité de forme avec une partie de guidage (4) du raccord lors du mouvement de fermeture, laquelle complémentarité de forme définissant, positionnant et maintenant l'outil à sertir par rapport au raccord, à la suite de quoi les parties de sertissage (15) réalisent le serrage de la languette à sertir (2) dans la phase finale du mouvement de fermeture.

11. Utilisation selon la revendication 10, dans laquelle les parties de guidage (18) des deux moitiés d'outil (14, 15, 18) sont arrêtées avant la phase finale du mouvement de fermeture en venant en butée sur le raccord à sertir lors de la réalisation de la complémentarité de forme.

12. Utilisation selon la revendication 10 ou 11, dans laquelle les parties de guidage (18) saisissent le raccord sur les deux côtés axiaux de la languette à sertir (2) et guident par interaction avec la partie de guidage (4) du raccord.

13. Utilisation selon la revendication 10, 11 ou 12 d'un outil à sertir selon la revendication 8, dans laquelle les parties de sertissage (15) effectuent la saisie dans la phase finale du mouvement de fermeture, avec les pointes en forme de coin respectives, dans une zone située entre la partie cylindrique (1) du raccord à sertir et une partie plate radialement extérieure de la languette à sertir (2), et serrent alors la languette à sertir (2), et uniquement la languette à sertir (2), sans saisir la partie de guidage (4) du raccord.

14. Utilisation selon l'une des revendications 10 à 13 d'un outil à sertir selon la revendication 9, dans laquelle une partie avant de l'éjecteur (25) venant en contact avec la partie de raccord (5) à enlever est adaptée à la forme du côté de la partie de raccord (5) qui lui est associée, et ce de manière à empêcher un dérapage de la partie de raccord (5) enlevée, dans un sens transversal au sens de déplacement de l'éjecteur (25).
